# EUROPÄISCHE PATENTSCHRIFT

(11) **EP 3 914 501 B1**
(45) Veröffentlichungstag und Bekanntmachung des Hinweises auf die Patenterteilung: **10.05.2023**
(21) Anmeldenummer: 20701937.3
(22) Anmeldetag: 20.01.2020
(51) Int. Cl.: H02P 29/024, H02P 29/028, B62D 5/04

(54) **VERFAHREN ZUM TRENNEN EINES MEHRPHASIGEN ELEKTROMOTORS EINER ELEKTROMECHANISCHEN KRAFTFAHRZEUGSERVOLENKUNG VON EINER GLEICHSPANNUNGSQUELLE UND STEUEREINHEIT ZUM ANSTEUERN DES ELEKTROMOTORS**
METHOD FOR DISCONNECTING A MULTI-PHASE ELECTRIC MOTOR OF AN ELECTROMECHANICAL MOTOR VEHICLE POWER STEERING SYSTEM FROM A DIRECT VOLTAGE SOURCE, AND CONTROL UNIT FOR CONTROLLING THE ELECTRIC MOTOR
PROCÉDÉ PERMETTANT DE SÉPARER D'UNE SOURCE DE TENSION CONTINUE UN MOTEUR ÉLECTRIQUE POLYPHASÉ D'UNE DIRECTION ASSISTÉE ÉLECTROMÉCANIQUE D'UN VÉHICULE À MOTEUR ET UNITÉ DE COMMANDE SERVANT À L'ACTIVATION DU MOTEUR ÉLECTRIQUE

(30) Priorität: 23.01.2019 DE 102019200821
(43) Veröffentlichungstag der Anmeldung: 01.12.2021
(73) Patentinhaber: thyssenkrupp Presta AG, 9492 Eschen (LI); thyssenkrupp AG, 45143 Essen (DE)
(72) Erfinder: KALAPOS, Gábor, 2230 Gyömro (HU)
(74) Vertreter: thyssenkrupp Intellectual Property GmbH
(86) Internationale Anmeldenummer: PCT/EP2020/051226
(87) Internationale Veröffentlichungsnummer: WO 2020/152077

(56) Entgegenhaltungen:
- EP-A2- 2 385 623
- DE-A1-102008 034 326
- US-A1- 2014 309 890

## Beschreibung

Die Erfindung betrifft ein Verfahren zum Trennen eines mehrphasigen Elektromotors einer elektromechanischen Kraftfahrzeugservolenkung von einer Gleichspannungsquelle und eine Steuereinheit zum Ansteuern des Elektromotors.

Bei elektromechanischen Kraftfahrzeugservolenkungen wird eine Hilfskraftunterstützung durch einen mehrphasigen, üblicherweise permanent erregten Elektromotor einer Servoeinheit im Bereich der Lenkwelle oder der Zahnstange in die Lenkung eingebracht. Der Elektromotor wird von einer Motorsteuerung über eine Treiberschaltung, die Schaltelemente einer Wechselrichterschaltung kontrolliert, angesteuert. Abhängig vom Schaltzustand der Schaltelemente werden die beispielsweise sternförmig verschalteten Phasenwicklungen des Elektromotors alternierend mit den Polen einer Gleichspannungsquelle, üblicherweise eines Gleichspannungsbordnetzes, verbunden.

Im Falle eines elektrischen Kurzschlussfehlers eines der Schaltelemente bleibt das betroffene Schaltelement leitend, obwohl die Treiberschaltung einen Öffnungsbefehl ausgibt. Dadurch werden während der Einschaltzyklen und/oder über Body-Dioden anderer Schaltelemente zwei Phasenwicklungen des Elektromotors mit demselben Pol der Spannungsquelle verbunden, so dass eine geschlossene Leiterschleife entsteht. In der Folge wird ein Bremsmoment erzeugt, da die Drehung des Rotors in der Leiterschleife einen Strom induziert, der seinerseits ein Magnetfeld erzeugt, das der Rotordrehung entgegenwirkt. Ein Kurzschlussfehler führt somit nicht nur zum Ausfall der Lenkunterstützung, sondern setzt der Lenkbewegung des Fahrers einen zusätzlichen Widerstand entgegen, der darüber hinaus pulsierend wirken kann. Dies ist bei Lenksystemen für Kraftfahrzeuge aus Sicherheitsgründen nicht tolerierbar.

Um dieses Problem zu lösen, ist es bekannt, Phasentrennvorrichtungen an den Zuleitungen der Phasenwicklungen des Motors vorzusehen, um im Falle eines Kurzschlussfehlers den Stromfluss in der jeweiligen Phase unterbrechen zu können. Nachteilig an dieser Lösung ist allerdings, dass bei einer plötzlichen Trennung des Phasenanschlusses hohe Induktionsspannungen auftreten können, insbesondere wenn sich die Motorwelle zum Zeitpunkt der Trennung schnell dreht. Wenn dadurch die Durchbruchspannungen der verwendeten Halbleiter-Phasentrennvorrichtungen überschritten werden, brennen die Phasentrennvorrichtungen im leitenden Zustand ein und können ihre Trennfunktion nicht mehr erfüllen. Weil es nur eine indirekte Korrelation zwischen der Rotationsgeschwindigkeit des Motors und der erforderlichen Stromunterbrechungsfähigkeit der Phasentrennvorrichtungen gibt, wurden überdimensionierte, großbauende und teure Phasentrenner eingesetzt, um solche Schäden zu vermeiden.

Aus US 2017/264221 A1 ist ferner ein Motortreiberschaltkreis mit zwei oder mehr Phasen und einer Motorbrückenschaltung mit einem Brückenarm für jede Phase des Motors bekannt. Der Motortreiberschaltkreis umfasst wenigstens ein Festkörper-Phasentrennrelais, das in Reihe geschaltet ist zwischen der jeweiligen Phase des Motors und dem zugeordneten Brückenarm. Das Relais ist im Normalbetrieb geschlossen und wird in einem Fehlermodus geöffnet, um den Stromfluss in der Phase zu unterbinden. Der Schaltkreis umfasst ferner ein Überwachungsmittel, um die Stromkurve in der Motorphase zu überwachen und im Fehlermodus anzuzeigen, zu welchem Zeitpunkt das Phasentrennrelais sicher geöffnet werden kann, ohne dass das Phasentrennrelais durch einen Lawinendurchbruch geschädigt wird. Das Vorsehen einer zusätzlichen Stromüberwachung, um die Nulldurchgänge des Stromverlaufs zu detektieren, ist aufwändig und kostenintensiv.

US 2014/0309890 A1 beschreibt ein Verfahren zum Realisieren eines Übergangs von einer funktionierenden Lenkunterstützung zu einer ausgeschalteten Lenkunterstützung bei Auftreten einer Störung, umfassend die Schritte: Feststellen der Störung der Lenkunterstützung, Feststellen, dass sämtliche High-side Leistungsschalter funktionstüchtig sind (erster Fall) oder Feststellen, dass sämtliche Low-side Leistungsschalter funktionstüchtig sind (zweiter Fall) und im ersten Fall: Öffnen sämtlicher High-side Leistungsschalter und PWM-artiges Ansteuern der Low-side Leistungsschalter oder im zweiten Fall: Öffnen sämtlicher Low-side Leistungsschalter und PWM-artiges Ansteuern der High-side Leistungsschalter.

Aufgabe der Erfindung ist es daher, ein Verfahren zum Trennen eines mehrphasigen Elektromotors einer elektromechanischen Kraftfahrzeugservolenkung von einer Gleichspannungsquelle und eine Steuereinheit zum Ansteuern des Elektromotors anzugeben, mittels derer die Trennung sicher und schnell mit einem verringerten Bauteil- und Steuerungsaufwand durchgeführt wird.

Diese Aufgabe wird gelöst durch ein Verfahren mit den Merkmalen des Anspruchs 1 und eine Steuereinheit mit den Merkmalen des Anspruchs 11.

Hierdurch wird ein Verfahren zum Trennen eines mehrphasigen Elektromotors einer elektromechanischen Kraftfahrzeugservolenkung von einer Gleichspannungsquelle mittels einer Steuereinheit zum Ansteuern des Elektromotors angegeben, wobei der mehrphasige Elektromotor mindestens drei Phasenwicklungen mit Anschlussleitungen aufweist, die zum Betrieb des Elektromotors mittels einer Motorsteuerung und einer Treiberschaltung der Steuereinheit jeweils über ein High-Side und ein Low-Side Schaltelement alternierend mit jeweils einem Pol der Gleichspannungsquelle verbindbar sind, und die Anschlussleitungen jeweils mindestens eine Phasentrennvorrichtung aufweisen, um die Phasenwicklungen in einem Fehlerfall von der Gleichspannungsquelle zu trennen, wobei die Steuereinheit die folgenden Verfahrensschritte ausführt:
- Überwachen der Schaltelemente auf Kurzschlussfehler während des Betriebs des Elektromotors,
- Wenn ein Kurzschlussfehler festgestellt wurde, Ausschalten der Schaltelemente,
- Feststellen, ob das den Kurzschlussfehler verursachende Schaltelement ein High-Side oder ein Low-Side Schaltelement ist,
- Einschalten mindestens eines zweiten der High-Side oder entsprechend mindestens eines zweiten der Low-Side Schaltelemente zusätzlich zu dem den Kurzschlussfehler verursachenden High-Side oder Low-Side Schaltelement, um den Elektromotor abzubremsen,
- Ausschalten der Schaltelemente nach Ablauf einer wählbaren Bremszeitspanne,
- Öffnen der Phasentrennvorrichtungen.

Es wird somit ein Trennverfahren geschaffen, bei dem der dauerhaft ungewünschte, durch geschlossene Leiterschleifen im Wechselrichter verursachte Bremseffekt vorteilhaft genutzt wird, um Überspannungen an den Phasentrennvorrichtungen zu vermeiden. Erfindungsgemäß ist vorgesehen, dass nach Feststellen eines Kurzschlussfehlers in einem der Schaltelemente des Wechselrichters, durch Einschalten mindestens eines weiteren mit demselben Pol der Gleichspannungsquelle verbundenen Schaltelements, eine Leiterschleife geschlossen wird, die ein Bremsmoment auf den Rotor bewirkt. Durch das bewusste Einbringen eines zusätzlichen Bremsmoments für die Dauer einer Bremszeitspanne wird die Rotationsgeschwindigkeit des Motors reduziert, bevor die Phasentrennvorrichtungen geöffnet werden. Die an den Phasentrennvorrichtungen auftretenden Induktionsspannungen und -ströme werden so wirksam reduziert, so dass die Gefahr einer Beschädigung durch Überspannungen vermieden und die verwendeten Phasentrennvorrichtungen kleiner dimensioniert werden können. Es muss somit nicht mehr auf niedrige Rotationsgeschwindigkeiten des Elektromotors und Nulldurchgänge des Induktionsstroms gewartet werden, sondern die Trennung kann durch aktives Abbremsen schnell und sicher eingeleitet und durchgeführt werden. Das bewusste Abbremsen des Elektromotors reduziert die im Elektromotor verbleibende elektrische und mechanische Energie auf ein Niveau, das keinen Schaden an den Phasentrennvorrichtungen mehr hervorrufen kann. Durch das Öffnen der Phasentrennvorrichtungen kann dann das induktive Bremsmoment der Steuereinheit vollständig abgeschaltet werden.

Vorzugsweise werden zum Abbremsen des Elektromotors sämtliche High-Side oder entsprechend sämtliche Low-Side Schaltelemente gleichzeitig eingeschaltet. Auf diese Weise wird das maximal mögliche Bremsdrehmoment zur Verfügung gestellt und die Bremswärmeleistung wird verteilt auf sämtliche Phasen des Elektromotors abgeführt. Ferner wird vorteilhaft erreicht, dass das Bremsmoment über eine Rotorumdrehung weitgehend konstant bleibt und ein pulsierendes Bremsmoment vermieden wird.

Die induktive Bremsung des Motors durch den Phasenschluss ist besonders effektiv, da das Bremsmoment mit der Rotorgeschwindigkeit ansteigt. Bevorzugt können daher kurze Bremszeitspannen im Bereich von 5 bis 50 ms vorgesehen werden, die die auftretenden Induktionsspannungen bereits ausreichend reduzieren.

In einer bevorzugten, besonders einfachen Ausführungsform wird als Bremszeitspanne ein fester, vorgegebener Wert gewählt. Dies hat den Vorteil, dass keine zusätzlichen Bauteile für die Überwachung der Rotationsgeschwindigkeit des Elektromotors benötigt werden.

Alternativ kann die Bremszeitspanne abhängig von der Rotationsgeschwindigkeit des Elektromotors gewählt werden. Beispielsweise kann über eine Nachschlagetabelle einer gemessenen Rotationsgeschwindigkeit ein Wert für die zu wählende Bremszeitspanne zugeordnet werden.

Besonders bevorzugt führt die Treiberschaltung während des Abbremsens des Elektromotors eine Schwellenwertüberwachung der Rotationsgeschwindigkeit des Elektromotors durch und beendet die Bremszeitspanne, sobald die Rotationsgeschwindigkeit einen wählbaren Schwellenwert unterschreitet. Durch die kontinuierliche Überwachung der Rotationsgeschwindigkeit kann die Bremszeitspanne optimal an die jeweils vorliegende Lenksituation angepasst werden, so dass die Öffnung der Phasentrennvorrichtungen sobald erfolgt, wie es sicher und zuverlässig möglich ist. Der Schwellenwert für die Rotationsgeschwindigkeit wird vorzugsweise im Bereich von 10% bis 30%, besonders bevorzugt im Bereich von 15% bis 25% der Nenndrehzahl des Elektromotors gewählt. Insbesondere kann der Schwellenwert zu 20% der Nenndrehzahl des Elektromotors gewählt werden.

Zum Feststellen, ob das den Kurzschlussfehler verursachende Schaltelement ein High-Side oder ein Low-Side Schaltelement ist, können die High-Side und die Low-Side Schaltelemente einzeln nacheinander gepulst eingeschaltet werden und es kann währenddessen ein Kurzschlussstrom der Gleichspannungsquelle gemessen werden. Durch das aufeinanderfolgende Einschalten sämtlicher Schaltelemente des Wechselrichters kann das defekte Schaltelement eindeutig ermittelt werden. Wird beim Einschalten eines Schaltelements ein Kurzschlussstrom detektiert, ist das jeweils andere Schaltelement des gleichen Brückenzweiges defekt. Die Information über das defekte Schaltelement kann vorteilhaft für die Fehlerdiagnose und die Reparatur des Wechselrichters verwendet werden.

Alternativ können zum Feststellen, ob das den Kurzschlussfehler verursachende Schaltelement ein High-Side oder ein Low-Side Schaltelement ist, sämtliche High-Side Schaltelemente zugleich und zeitlich getrennt davon sämtliche Low-Side Schaltelemente zugleich gepulst eingeschaltet werden und es kann währenddessen ein Kurzschlussstrom der Gleichspannungsquelle gemessen werden. Bei dieser Vorgehensweise wird mit nur zwei Messungen die für die nachfolgenden Verfahrensschritte erforderliche Information ermittelt, so dass eine besonders schnelle Trennung des Elektromotors von der Gleichspannungsquelle erzielbar ist.

Vorzugsweise sind die High-Side und die Low-Side Schaltelemente Halbleiterschaltelemente. Besonders bevorzugt werden die Halbleiterschaltelemente während der Bremszeitspanne teilangesteuert eingeschaltet. Durch die Wahl der Teilansteuerung kann das eingebrachte Bremsmoment gezielt eingestellt werden. Durch den im Vergleich zur Vollansteuerung erhöhten elektrischen Widerstand der Schaltelemente wird das erzeugte Bremsmoment und damit auch die in der Schaltung abzuführende Wärmeleistung reduziert. Insbesondere bei hohen Rotationsgeschwindigkeiten des Elektromotors kann so eine Überhitzung der elektronischen Bauteile vermieden werden.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.
- Fig. 1: zeigt schematisch eine elektromechanische Servolenkung mit einer erfindungsgemäßen Steuereinheit und mehreren Möglichkeiten zur Anordnung des Servomotors,
- Fig. 2: zeigt schematisch den Aufbau der Steuereinheit nach dem Ausführungsbeispiel gemäß Fig. 1,
- Fig. 3: zeigt schematisch ein Diagramm mit dem zeitlichen Verlauf der Rotationsgeschwindigkeit des Elektromotors, eines Bremssignals und eines Phasentrennsignals zur Illustration des Bremsvorgangs.

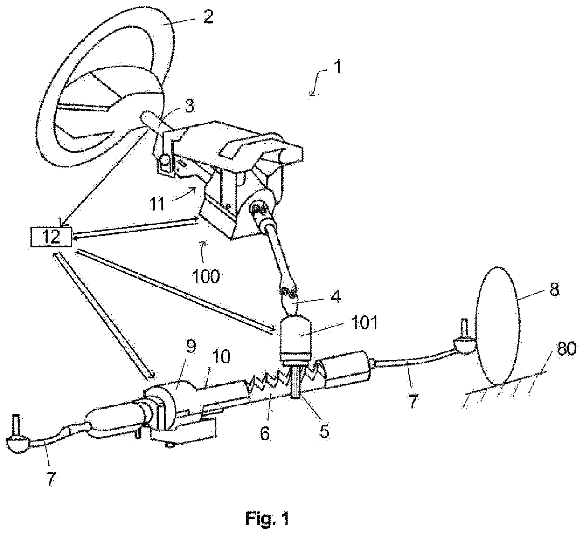

In Fig. 1 ist schematisch eine elektromechanische Kraftfahrzeugservolenkung 1 mit einem Lenkrad 2, das mit einer oberen Lenkwelle 3 drehfest gekoppelt ist, dargestellt. Über das Lenkrad 2 bringt der Fahrer ein Drehmoment als Lenkbefehl in die Lenkwelle 3 ein. Das Drehmoment wird dann über die obere Lenkwelle 3 und eine untere Lenkwelle 4 auf ein Lenkritzel 5 übertragen. Das Ritzel 5 kämmt mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind über Achsschenkel mit je einem gelenkten Rad 8 des Kraftfahrzeugs verbunden.

Eine Drehung des Lenkrades 2 führt über die Verbindung der Lenkwelle 3, 4 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegenwirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um den Fahrer bei dieser Lenkbewegung zu unterstützen. Die obere Lenkwelle 3 und die untere Lenkwelle 4 sind drehelastisch über einen nicht gezeigten Torsionsstab miteinander gekoppelt. Eine Drehmomentsensoreinheit 11 erfasst die Verdrehung der oberen Lenkwelle 3 gegenüber der unteren Lenkwelle 4 als ein Maß des über das Lenkrad 2 auf die Lenkwelle 3 ausgeübten Drehmomentes. In Abhängigkeit des von der Drehmomentsensoreinheit 11 gemessenen Drehmoments berechnet die Steuereinheit 12 die Lenkunterstützung, die von der Servoeinheit 10 bereitgestellt wird.

Die Servoeinheit 10 kann dabei als Hilfskraftunterstützungseinrichtung 10, 100, 101 entweder mit einer Lenkwelle 3, 4, dem Lenkritzel 5 oder der Zahnstange 6 gekoppelt sein. Die jeweilige Hilfskraftunterstützung 10, 100, 101 trägt ein Hilfskraftmoment in die Lenkwelle 3, 4, das Lenkritzel 5 und/oder in die Zahnstange 6 ein, wodurch der Fahrer bei der Lenkarbeit unterstützt wird. Die drei unterschiedlichen in Fig. 1 dargestellten Hilfskraftunterstützungseinrichtungen 10, 100, 101 zeigen alternative Positionen für deren Anordnung. Üblicherweise ist nur eine einzige der gezeigten Positionen mit einer Hilfskraftunterstützung ausgestattet.

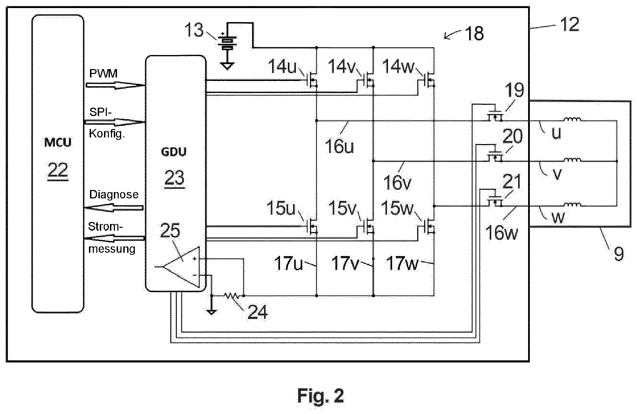

Fig. 2 zeigt schematisch einen Schaltplan für den Leistungsteil der Steuereinheit 12, an die ein mehrphasiger Elektromotor 9 einer Servoeinheit angeschlossen ist. Üblicherweise wird ein dreiphasiger Elektromotor 9 verwendet, wie in Fig. 2 dargestellt. Zum Ansteuern des mehrphasigen Elektromotors 9 der elektromechanischen Kraftfahrzeugservolenkung 1 umfasst die Steuereinheit 12 eine Motorsteuerung (MCU) 22 und eine an die Motorsteuerung 22 angeschlossene Treiberschaltung (GDU) 23. Die Steuereinheit 12 umfasst ferner von der Treiberschaltung 23 angesteuerten High-Side Schaltelemente 14u, 14v, 14w und Low-Side Schaltelemente 15u, 15v, 15w, sowie mindestens drei Anschlussleitungen 16u, 16v, 16w, an die Phasenwicklungen u, v, w des Elektromotors 9 anschließbar sind. Die Anschlussleitungen 16u, 16v, 16w weisen jeweils mindestens eine von der Treiberschaltung 23 ansteuerbare Phasentrennvorrichtung 19, 20, 21 auf. Die Anschlussleitungen 16u, 16v, 16w sind mittels der Treiberschaltung 23 jeweils über ein High-Side 14u, 14v, 14w und ein Low-Side Schaltelement 15u, 15v, 15w alternierend mit jeweils einem Pol einer Gleichspannungsquelle 13 verbindbar. Die Steuereinheit 12 weist ferner eine Strommessvorrichtung 24, 25 zur Messung eines zwischen den Polen der Gleichspannungsquelle 13 fließenden Stromes auf.

Die High-Side Schaltelemente 14u, 14v, 14w und die Low-Side Schaltelemente 15u, 15v, 15w bilden eine Brückenschaltung 18, über die die Phasenwicklungen u, v, w des Elektromotors 9 an eine Gleichspannungsquelle 13, üblicherweise das Bordnetz eines Kraftfahrzeugs, angeschlossen sind. Für jede Phase u, v, w des Elektromotors 9 weist die Brückenschaltung 18 einen Brückenzweig 17u, 17v, 17w auf. Jeder Brückenzweig 17u, 17v, 17w weist ein High-Side Schaltelement 14u, 14v, 14w, das mit dem positiven Pol der Gleichspannungsquelle 13 verbunden ist, und ein Low-Side Schaltelement 15u, 15v, 15w auf, das mit dem negativen Pol der Gleichspannungsquelle 13, d.h. üblicherweise dem Masseanschluss des Bordnetzes, verbunden ist. Zwischen dem High-Side und dem Low-Side Schaltelement ist die jeweilige Phasenwicklung u, v, w über eine zugeordnete Anschlussleitung 16u, 16v, 16w angeschlossen. Zur Gleichspannungsquelle 13 ist üblicherweise ein nicht dargestellter Ladekondensator parallel geschaltet, um den schwankenden Leistungsbedarf der Brückenschaltung zu glätten.

Zur Strommessung können die Brückenzweige 17u, 17v, 17w, wie in Fig. 2 dargestellt, über einen Shunt-Widerstand 24 mit einem der Pole der Gleichspannungsquelle 13 verbunden sein. Die an dem Shunt-Widerstand 24 abfallende Spannung ist ein Maß für den durch die Brückenschaltung 18 zwischen den Polen der Gleichspannungsquelle 13 fließenden Strom. Die am Shunt-Widerstand 24 anliegende Spannungsdifferenz kann über einen Verstärker 25 verstärkt und als Strommesssignal in der Treiberschaltung 23 ausgewertet werden. Das Strommesssignal kann ferner der Motorsteuerung 22 zu Diagnosezwecken zur Verfügung gestellt werden. Die Strommessung kann auch in jedem Brückenzweig 17u, 17v, 17w einzeln erfolgen.

Während des Betriebs führt die in Fig. 2 dargestellte Steuereinheit 12 zum Ansteuern des Elektromotors 9 die folgenden Verfahrensschritte zum Trennen des mehrphasigen Elektromotors 9 der elektromechanischen Kraftfahrzeugservolenkung 1 von der Gleichspannungsquelle 13 aus:
- Überwachen der Schaltelemente 14u, 14v, 14w, 15u, 15v, 15w auf Kurzschlussfehler während des Betriebs des Elektromotors 9,
- Wenn ein Kurzschlussfehler festgestellt wurde, Ausschalten der Schaltelemente 14u, 14v, 14w, 15u, 15v, 15w,
- Feststellen, ob das den Kurzschlussfehler verursachende Schaltelement ein High-Side 14u, 14v, 14w oder ein Low-Side Schaltelement 15u, 15v, 15w ist,
- Einschalten mindestens eines zweiten der High-Side 14u, 14v, 14w oder entsprechend mindestens eines zweiten der Low-Side Schaltelemente 15u, 15v, 15w zusätzlich zu dem den Kurzschlussfehler verursachenden High-Side oder Low-Side Schaltelement, um den Elektromotor 9 abzubremsen,
- Ausschalten der Schaltelemente 14u, 14v, 14w, 15u, 15v, 15w nach Ablauf einer wählbaren Bremszeitspanne,
- Öffnen der Phasentrennvorrichtungen 19, 20, 21.

Die Überwachung der Schaltelemente 14u, 14v, 14w, 15u, 15v, 15w auf Kurschlussfehler erfolgt vorzugsweise durch die Strommessvorrichtung 24, 25. Bei einem Kurzschlussfehler eines Schaltelements 14u, 14v, 14w, 15u, 15v, 15w bleibt das betroffene Schaltelement trotz eines Öffnungsbefehls geschlossen. Während des Motorbetriebs kommen dann Schaltzyklen der Schaltelemente 14u, 14v, 14w, 15u, 15v, 15w vor, während derer beide Schaltelemente eines Brückenzweigs 17u, 17v, 17w gleichzeitig geschlossen sind, so dass eine direkte Verbindung zwischen den Polen der Gleichspannungsquelle 13 besteht. Dies hat einen als messbare Stromspitze detektierbaren Kurzschlussstrom zur Folge. Wenn die Strommessvorrichtung 24, 25 eine solche Stromspitze misst, kann demnach auf einen Kurzschlussfehler geschlossen werden. Die Überwachung der Schaltelemente 14u, 14v, 14w, 15u, 15v, 15w kann auch im Rahmen einer üblichen Online-Diagnostik, wie beispielsweise einer Pulsweitenüberwachung (PWM monitoring), einer internen Diagnostik der Treiberschaltung (GDU) oder einer Überstromdetektion an den Schaltelementen, erfolgen.

Sobald ein Kurzschlussfehler detektiert wurde, werden sämtliche Schaltelemente 14,15 zur Vermeidung von Kurzschlussströmen und zur Verringerung des auftretenden Bremsmoments ausgeschaltet. Die Phasentrennvorrichtungen 19, 20, 21 bleiben zu diesem Zeitpunkt geschlossen. Die als Schaltelemente üblicherweise verwendeten Halbleiterschaltelemente, wie MOSFETs oder IGBTs, weisen regelmäßig Inversdioden auf. Durch die Inversdioden bleibt somit eine geschlossene Leiterschleife auch bei geöffneten Schaltelementen 14u, 14v, 14w, 15u, 15v, 15w zumindest für eine Stromrichtung bestehen, sobald eines der Schaltelemente einen Kurzschlussfehler aufweist. Der Bremseffekt kann daher durch das Öffnen der Schaltelemente allein nicht vollständig aufgehoben werden.

Zum Feststellen, ob das den Kurzschlussfehler verursachende Schaltelement ein High-Side oder ein Low-Side Schaltelement ist, können die Schaltelemente 14u, 14v, 14w, 15u, 15v, 15w vorzugsweise einzeln nacheinander eingeschaltet und der dabei auftretende Kurzschlussstrom mit der Strommessvorrichtung 24, 25 bestimmt werden. Sobald ein Kurzschlussstrom auftritt, kann die Feststellung beendet werden. Das dem geschalteten High- bzw. Low-Side Schaltelement zugeordnete Low- bzw. High-Side Schaltelement in demselben Brückenzweig 17u, 17v, 17w kann damit als defekt identifiziert werden. Alternativ können zugleich alle Low- bzw. alle High-Side Schaltelemente zeitlich getrennt voneinander pulsweise eingeschaltet werden, um möglichst schnell festzustellen, ob das den Kurzschlussfehler verursachende Schaltelement ein High-Side oder ein Low-Side Schaltelement ist.

Durch das Öffnen der Phasentrennvorrichtungen erst nach Ablauf einer definierten Bremszeitspanne, können kleiner dimensionierte Phasentrennvorrichtungen verwendet werden. Die Kombination eines bewusst initiierten Bremsvorgangs mit einem anschließenden Öffnen der Phasenschalter hat zudem den Vorteil, dass die Steuereinheit die Phasentrennvorrichtungen sicher öffnen kann, und dann kein induktives Bremsmoment mehr durch die Steuereinheit generiert wird.

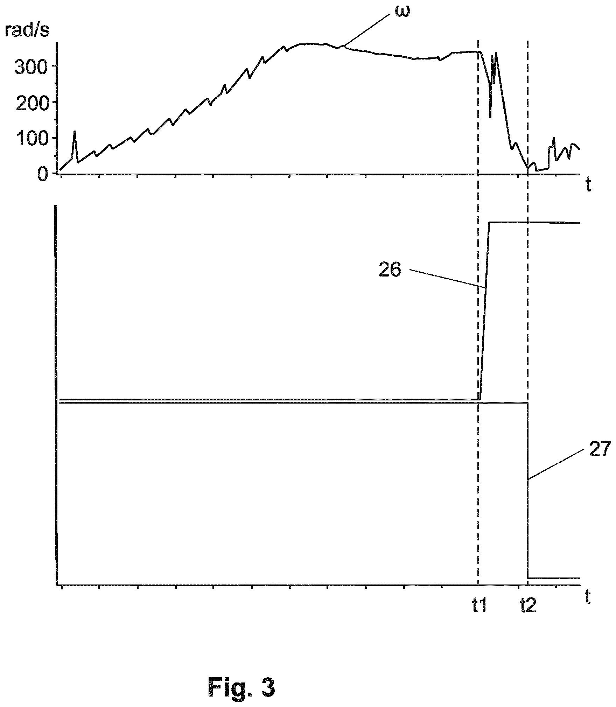

In Fig. 3 ist der zeitliche Verlauf einer Rotationsgeschwindigkeit ω eines Elektromotors 9 einer Servoeinheit 10, sowie ein Bremssignal 26 und ein Phasentrennsignal 27 gezeigt. Die Rotationsgeschwindigkeit ω des Motors 9 nimmt zunächst zu und erreicht dann ein Plateau bei ca. 300 rad/s. Zum Zeitpunkt t1 werden sämtliche High-Side 14 bzw. sämtliche Low-Side Schaltelemente 15 durch das Bremssignal 26 eingeschaltet. Die Rotationsgeschwindigkeit ω des Elektromotors 9 nimmt in der Folge drastisch ab. Zum Zeitpunkt t2 werden die Phasentrennvorrichtungen 19, 20, 21 durch das Phasentrennsignal 27 geöffnet. Die Bremszeitspanne zwischen t1 und t2 kann beispielsweise 22 ms betragen.

Die vorliegende Erfindung kann insbesondere in allen Kraftfahrzeugservolenkungen eingesetzt werden, in denen eine DC-Bus-Überwachung, Rotorpositions- und damit auch Rotorgeschwindigkeitssensoren und Phasentrennvorrichtungen vorhanden sind. Das vorgeschlagene Verfahren löst das angegebene technische Problem unabhängig von der Einbaurichtung der in den Phasentrennvorrichtungen vorgesehenen Inversdioden.

### Bezugszeichenliste

- 1: Kraftfahrzeugservolenkung
- 2: Lenkrad
- 3: obere Lenkwelle
- 4: untere Lenkwelle
- 5: Ritzel
- 6: Zahnstange
- 7: Spurstangen
- 8: Rad
- 9: Elektromotor
- 10: Servoeinheit
- 11: Drehmomentsensoreinheit
- 12: Steuereinheit
- 13: Gleichspannungsquelle
- 14u, 14v, 14w: High-Side Schaltelemente
- 15u, 15v, 15w: Low-Side Schaltelemente
- 16u, 16v, 16w: Anschlussleitungen
- 17u, 17v, 17w: Brückenzweige
- 18: Brückenschaltung
- 19, 20, 21: Phasentrennvorrichtungen
- 22: Motorsteuerung (MCU)
- 23: Treiberschaltung (GDU)
- 24: Shunt-Widerstand
- 25: Verstärker
- 26: Bremssignal
- 27: Phasentrennsignal
- 80: Fahrbahn
- 10, 100, 101: Hilfskraftunterstützungseinheit

- u, v, w: Phasenwicklungen
- ω: Rotationsgeschwindigkeit

## Patentansprüche

1. Verfahren zum Trennen eines mehrphasigen Elektromotors (9) einer elektromechanischen Kraftfahrzeugservolenkung (1) von einer Gleichspannungsquelle (13) mittels einer Steuereinheit (12) zum Ansteuern des Elektromotors (9), wobei der mehrphasige Elektromotor (9) mindestens drei Phasenwicklungen (u, v, w) mit Anschlussleitungen (16u, 16v, 16w) aufweist, die zum Betrieb des Elektromotors (9) mittels einer Motorsteuerung (22) und einer Treiberschaltung (23) der Steuereinheit (12) jeweils über ein High-Side (14u, 14v, 14w) und ein Low-Side Schaltelement (15u, 15v, 15w) alternierend mit jeweils einem Pol der Gleichspannungsquelle (13) verbindbar sind, und die Anschlussleitungen (16u, 16v, 16w) jeweils mindestens eine Phasentrennvorrichtung (19, 20, 21) aufweisen, um die Phasenwicklungen (u, v, w) in einem Fehlerfall von der Gleichspannungsquelle (13) zu trennen, wobei die Steuereinheit (12) die folgenden Verfahrensschritte ausführt:
- Überwachen der Schaltelemente (14u, 14v, 14w, 15u, 15v, 15w) auf Kurzschlussfehler während des Betriebs des Elektromotors (9),
- Wenn ein Kurzschlussfehler festgestellt wurde, Ausschalten der Schaltelemente (14u, 14v, 14w, 15u, 15v, 15w),
- Feststellen, ob das den Kurzschlussfehler verursachende Schaltelement ein High-Side (14u, 14v, 14w) oder ein Low-Side Schaltelement (15u, 15v, 15w) ist,
- Einschalten mindestens eines zweiten der High-Side (14u, 14v, 14w) oder entsprechend mindestens eines zweiten der Low-Side Schaltelemente (15u, 15v, 15w) zusätzlich zu dem den Kurzschlussfehler verursachenden High-Side oder Low-Side Schaltelement, um den Elektromotor (9) abzubremsen,
- Ausschalten der Schaltelemente (14u, 14v, 14w, 15u, 15v, 15w) nach Ablauf einer wählbaren Bremszeitspanne,
- Öffnen der Phasentrennvorrichtungen (19, 20, 21).

2. Verfahren nach Anspruch 1, **dadurch gekennzeichnet, dass** zum Abbremsen des Elektromotors (9) sämtliche High-Side (14u, 14v, 14w) oder entsprechend sämtliche Low-Side Schaltelemente (15u, 15v, 15w) gleichzeitig eingeschaltet werden.

3. Verfahren nach Anspruch 1 oder 2, **dadurch gekennzeichnet, dass** die Bremszeitspanne im Bereich von 5 bis 50 ms gewählt wird.

4. Verfahren nach einem der Ansprüche 1 bis 3, **dadurch gekennzeichnet, dass** als Bremszeitspanne ein fester, vorgegebener Wert gewählt wird.

5. Verfahren nach einem der Ansprüche 1 bis 3, **dadurch gekennzeichnet, dass** die Bremszeitspanne abhängig von einer Rotationsgeschwindigkeit (ω) des Elektromotors (9) gewählt wird.

6. Verfahren nach Anspruch 5, **dadurch gekennzeichnet, dass** die Treiberschaltung (23) während des Abbremsens des Elektromotors (9) eine Schwellenwertüberwachung der Rotationsgeschwindigkeit (ω) des Elektromotors durchführt und die Bremszeitspanne beendet, sobald die Rotationsgeschwindigkeit (ω) des Elektromotors (9) einen wählbaren Schwellenwert unterschreitet.

7. Verfahren nach Anspruch 6, **dadurch gekennzeichnet, dass** der Schwellenwert im Bereich von 10% bis 30%, vorzugsweise im Bereich von 15 % bis 25 % der Nenndrehzahl des Elektromotors (9) gewählt wird.

8. Verfahren nach einem der Ansprüche 1 bis 7, **dadurch gekennzeichnet, dass** zum Feststellen, ob das den Kurzschlussfehler verursachende Schaltelement ein High-Side (14u, 14v, 14w) oder ein Low-Side Schaltelement (15u, 15v, 15w) ist, die High-Side (14u, 14v, 14w) und die Low-Side Schaltelemente (15u, 15v, 15w) einzeln nacheinander gepulst eingeschaltet werden und währenddessen ein Kurzschlussstrom der Gleichspannungsquelle (13) gemessen wird.

9. Verfahren nach einem der Ansprüche 1 bis 7, **dadurch gekennzeichnet, dass** zum Feststellen, ob das den Kurzschlussfehler verursachende Schaltelement ein High-Side (14u, 14v, 14w) oder ein Low-Side-Schaltelement (15u, 15v, 15w) ist, sämtliche High-Side Schaltelemente (14u, 14v, 14w) zugleich und zeitlich getrennt davon sämtliche Low-Side Schaltelemente (15u, 15v, 15w) zugleich gepulst eingeschaltet werden und währenddessen ein Kurzschlussstrom der Gleichspannungsquelle (13) gemessen wird.

10. Verfahren nach einem der Ansprüche 1 bis 9, **dadurch gekennzeichnet, dass** die High-Side (14u, 14v, 14w) und die Low-Side-Schaltelemente (15u, 15v, 15w) Halbleiterschaltelemente sind.

11. Verfahren nach Anspruch 9, **dadurch gekennzeichnet, dass** die Halbleiterschaltelemente während der Bremszeitspanne teilangesteuert eingeschaltet werden.

12. Steuereinheit zum Ansteuern eines mehrphasigen Elektromotors (9) einer elektromechanischen Kraftfahrzeugservolenkung (1) umfassend eine Motorsteuerung (22), eine an die Motorsteuerung (22) angeschlossene Treiberschaltung (23), von der Treiberschaltung (23) angesteuerte High-Side (14u, 14v, 14w) und Low-Side Schaltelemente (15u, 15v, 15w), mindestens drei Anschlussleitungen (16u, 16v, 16w), an die Phasenwicklungen (u, v, w) des Elektromotors (9) anschließbar sind, wobei die Anschlussleitungen (16u, 16v, 16w) jeweils mindestens eine von der Treiberschaltung (23) ansteuerbare Phasentrennvorrichtung (19, 20, 21) aufweisen und mittels der Treiberschaltung (23) jeweils über ein High-Side (14u, 14v, 14w) und ein Low-Side Schaltelement (15u, 15v, 15w) alternierend mit jeweils einem Pol einer Gleichspannungsquelle (13) verbindbar sind, und eine Strommessvorrichtung zur Messung eines zwischen den Polen der Gleichspannungsquelle (13) fließenden Stromes,
**dadurch gekennzeichnet, dass** die Treiberschaltung (23) dazu ausgebildet ist, das Verfahren nach einem der Ansprüche 1 bis 10 auszuführen.

## Claims

1. A method for disconnecting a multiphase electric motor (9) of an electromechanical motor vehicle power steering system (1) from a DC voltage source (13) by means of a control unit (12) for driving the electric motor (9), wherein the multiphase electric motor (9) has at least three phase windings (u, v, w) with connection lines (16u, 16v, 16w), which, for operating the electric motor (9) by means of a motor controller (22) and a driver circuit (23) of the control unit (12), can each be alternately connected via a high-side (14u, 14v, 14w) and a low-side switching element (15u, 15v, 15w) to a respective pole of the DC voltage source (13), and the connection lines (16u, 16v, 16w) each have at least one phase disconnection device (19, 20, 21) in order to disconnect the phase windings (u, v, w) from the DC voltage source (13) in the event of a fault, wherein the control unit (12) carries out the following method steps:
- monitoring the switching elements (14u, 14v, 14w, 15u, 15v, 15w) for short-circuit faults during operation of the electric motor (9),
- if a short-circuit fault has been determined, switching off the switching elements (14u, 14v, 14w, 15u, 15v, 15w),
- determining whether the switching element causing the short-circuit fault is a high-side (14u, 14v, 14w) or a low-side switching element (15u, 15v, 15w),
- switching on at least a second of the high-side (14u, 14v, 14w) or correspondingly at least a second of the low-side switching elements (15u, 15v, 15w) in addition to the high-side or low-side switching element causing the short-circuit fault in order to brake the electric motor (9),
- switching off the switching elements (14u, 14v, 14w, 15u, 15v, 15w) after a selectable braking period has elapsed,
- opening the phase disconnection devices (19, 20, 21).

2. The method as claimed in claim 1, **characterized in that,** to brake the electric motor (9), all high-side (14u, 14v, 14w) or correspondingly all low-side switching elements (15u, 15v, 15w) are switched on at the same time.

3. The method as claimed in claim 1 or 2, **characterized in that** the braking period is selected in the range from 5 to 50 ms.

4. The method as claimed in one of claims 1 to 3, **characterized in that** a fixed, predetermined value is selected as the braking period.

5. The method as claimed in one of claims 1 to 3, **characterized in that** the braking period is selected depending on a rotation speed (ω) of the electric motor (9).

6. The method as claimed in claim 5, **characterized in that** the driver circuit (23) carries out threshold value monitoring of the rotation speed (ω) of the electric motor while the electric motor (9) is braked and ends the braking period as soon as the rotation speed (ω) of the electric motor (9) falls below a selectable threshold value.

7. The method as claimed in claim 6, **characterized in that** the threshold value is selected in the range from 10% to 30%, preferably in the range from 15% to 25%, of the rated speed of the electric motor (9).

8. The method as claimed in one of claims 1 to 7, **characterized in that,** to determine whether the switching element causing the short-circuit fault is a high-side (14u, 14v, 14w) or a low-side switching element (15u, 15v, 15w), the high-side (14u, 14v, 14w) and the low-side switching elements (15u, 15v, 15w) are switched on individually one after the other in a pulsed manner and during this time a short-circuit current of the DC voltage source (13) is measured.

9. The method as claimed in one of claims 1 to 7, **characterized in that,** to determine whether the switching element causing the short-circuit fault is a high-side (14u, 14v, 14w) or a low-side switching element (15u, 15v, 15w), all high-side switching elements (14u, 14v, 14w) simultaneously and, at a separate time thereto, all low-side switching elements (15u, 15v, 15w) simultaneously are switched on in a pulsed manner and during this time a short-circuit current of the DC voltage source (13) is measured.

10. The method as claimed in one of claims 1 to 9, **characterized in that** the high-side (14u, 14v, 14w) and the low-side switching elements (15u, 15v, 15w) are semiconductor switching elements.

11. The method as claimed in claim 9, **characterized in that** the semiconductor switching elements are switched on in a partially driven manner during the braking period.

12. A control unit for driving a multiphase electric motor (9) of an electromechanical motor vehicle power steering system (1) comprising a motor controller (22), a driver circuit (23) connected to the motor controller (22), high-side (14u, 14v,14w) and low-side switching elements (15u, 15v, 15w) driven by the driver circuit (23), at least three connection lines (16u, 16v, 16w) to which phase windings (u, v, w) of the electric motor (9) can be connected, wherein the connection lines (16u, 16v, 16w) each have at least one phase disconnection device (19, 20, 21) that can be driven by the driver circuit (23) and by means of the driver circuit (23) can each be alternately connected via a high-side (14u, 14v, 14w) and a low-side switching element (15u, 15v, 15w) to a respective pole of a DC voltage source (13), and a current measuring device for measuring a current flowing between the poles of the DC voltage source (13),
**characterized in that** the driver circuit (23) is designed to carry out the method as claimed in one of claims 1 to 10.

## Revendications

1. Procédé pour séparer un moteur électrique (9) multiphasé d'une direction assistée de véhicule automobile (1) d'une source de tension continue (13) au moyen dune unité de commande (12) destinée à commander le moteur électrique (9), le moteur électrique (9) multiphasé possédant au moins trois enroulements de phase (u, v, w) avec des lignes de raccordement (16u, 16v, 16w) qui, en vue de faire fonctionner le moteur électrique (9) au moyen d'une commande de moteur (22) et d'un circuit d'attaque (23) de l'unité de commande (12), peuvent être reliées respectivement par le biais d'un élément de commutation côté haut (14u, 14v, 14w) et d'un élément de commutation côté bas (15u, 15v, 15w) en alternance respectivement à un pôle de la source de tension continue (13), et les lignes de raccordement (16u, 16v, 16w) possédant respectivement au moins un dispositif de séparation des phases (19, 20, 21) afin de séparer les enroulements de phase (u, v, w) de la source de tension continue (13) dans le cas d'un défaut, l'unité de commande (12) exécutant les étapes de procédé suivantes :
- surveillance des éléments de commutation (14u, 14v, 14w, 15u, 15v, 15w) en vue de détecter un défaut de court-circuit pendant le fonctionnement du moteur électrique (9),
- lorsqu'un défaut de court-circuit est constaté, mise hors circuit des éléments de commutation (14u, 14v, 14w, 15u, 15v, 15w),
- identifier si l'élément de commutation qui cause le défaut de court-circuit est un élément de commutation côté haut (14u, 14v, 14w) ou un élément de commutation côté bas (15u, 15v, 15w),
- mise en circuit d'au moins un deuxième des éléments de commutation côté haut (14u, 14v, 14w) ou, en conséquence au moins un deuxième des éléments de commutation côté bas (15u, 15v, 15w) en plus de l'élément de commutation côté haut ou côté bas qui cause le défaut de court-circuit afin de freiner le moteur électrique (9),
- mise hors circuit des éléments de commutation (14u, 14v, 14w, 15u, 15v, 15w) après écoulement d'une période de freinage sélectionnable,
- ouverture des dispositifs de séparation des phases (19, 20, 21).

2. Procédé selon la revendication 1, **caractérisé en ce que** pour freiner le moteur électrique (9), tous les éléments de commutation côté haut (14u, 14v, 14w) ou, en conséquence, tous les éléments de commutation côté bas (15u, 15v, 15w) sont mis en circuit simultanément.

3. Procédé selon la revendication 1 ou 2, **caractérisé en ce que** la période de freinage est choisie dans la plage de 5 à 50 ms.

4. Procédé selon l'une des revendications 1 à 3, **caractérisé en ce qu'**une valeur fixe prédéfinie est sélectionnée comme période de freinage.

5. Procédé selon l'une des revendications 1 à 3, **caractérisé en ce que** la période de freinage est choisie en fonction de la vitesse de rotation (ω) du moteur électrique (9).

6. Procédé selon la revendication 5, **caractérisé en ce que** le circuit d'attaque (23) effectue une surveillance de valeur de seuil de la vitesse de rotation (ω) du moteur électrique pendant le freinage du moteur électrique (9) et met fin à la période de freinage dès que la vitesse de rotation (ω) du moteur électrique (9) devient inférieure à une valeur de seuil sélectionnable.

7. Procédé selon la revendication 6, **caractérisé en ce que** la valeur de seuil est choisie dans la plage de 10 % à 30 %, de préférence dans la plage de 15 % à 25 % de la vitesse de rotation nominale du moteur électrique (9).

8. Procédé selon l'une des revendications 1 à 7, **caractérisé en ce qu'**en vue d'identifier si l'élément de commutation qui cause le défaut de court-circuit est un élément de commutation côté haut (14u, 14v, 14w) ou un élément de commutation côté bas (15u, 15v, 15w), les éléments de commutation côté haut (14u, 14v, 14w) et les éléments de commutation côté bas (15u, 15v, 15w) sont mis en circuit de manière pulsée individuellement l'un après l'autre et un courant de court-circuit de la source de tension continue (13) est mesuré pendant ce temps.

9. Procédé selon l'une des revendications 1 à 7, **caractérisé en ce qu'**en vue d'identifier si l'élément de commutation qui cause le défaut de court-circuit est un élément de commutation côté haut (14u, 14v, 14w) ou un élément de commutation côté bas (15u, 15v, 15w), tous les éléments de commutation côté haut (14u, 14v, 14w) sont mis en circuit simultanément de manière pulsée et, séparément dans le temps de cela, tous les éléments de commutation côté bas (15u, 15v, 15w) simultanément et un courant de court-circuit de la source de tension continue (13) est mesuré pendant ce temps.

10. Procédé selon l'une des revendications 1 à 9, **caractérisé en ce que** les éléments de commutation côté haut (14u, 14v, 14w) et les éléments de commutation côté bas (15u, 15v, 15w) sont des éléments de commutation semiconducteurs.

11. Procédé selon la revendication 9, **caractérisé en ce que** les éléments de commutation semiconducteurs sont mis en circuit par excitation partielle pendant la période de freinage.

12. Unité de commande pour commander un moteur électrique (9) multiphasé d'une direction assistée de véhicule automobile (1), comprenant une commande de moteur (22), un circuit d'attaque (23) raccordé à la commande de moteur (22), des éléments de commutation côté haut (14u, 14v, 14w) et des éléments de commutation côté bas (15u, 15v, 15w) commandés par le circuit d'attaque (23), au moins trois lignes de raccordement (16u, 16v, 16w), auxquelles peuvent être raccordés les enroulements de phase (u, v, w) du moteur électrique (9), les lignes de raccordement (16u, 16v, 16w) possédant respectivement au moins un dispositif de séparation des phases (19, 20, 21) commandable par le circuit d'attaque (23) et pouvant être reliées, au moyen du circuit d'attaque (23), respectivement par le biais d'un élément de commutation côté haut (14u, 14v, 14w) et d'un élément de commutation côté bas (15u, 15v, 15w) en alternance respectivement à un pôle de la source de tension continue (13), et un dispositif de mesure de courant destiné à mesurer un courant qui circule entre les pôles de la source de tension continue (13),
**caractérisée en ce que** le circuit d'attaque (23) est configuré pour mettre en œuvre le procédé selon l'une des revendications 1 à 10.
